# EUROPEAN PATENT SPECIFICATION

(11) **EP 1 916 172 B1**
(45) Date of publication and mention of the grant of the patent: **05.08.2009**
(21) Application number: 06381043.6
(22) Date of filing: 24.10.2006
(51) Int. Cl.: B62B 3/02, B23D 19/08

(54) **Moving carriage for a machine**
Transportwagen für eine Maschine
Chariot mobile pour machine

(43) Date of publication of application: 30.04.2008
(73) Proprietor: Cevisa Fabricaciones, S.L., 01013 Vitoria (ES)
(72) Inventor: Ábalos Cortazár, Ángel, 01013 Vitoria (ES)
(74) Representative: Urizar Anasagasti, Jesus Maria

(56) References cited:
- CH-A- 307 719
- FR-A1- 2 545 776

## Description

### Object of the Invention

As its name indicates, the present invention relates to a carriage for moving a machine during its running; specifically this carriage has been designed for a beveler moving by itself along the part as it carries out its machining.

### Background of the Invention

Tool machines normally have means for moving the cutting tool on rails or carriages forming part of the machine itself, it is not usual to find a machine moving by itself on the part to be machined, as is the case of a beveler of the type comprising a cutting tool arranged in a shaft inclined with respect to the horizontal, and before it there are means for fixing the part below and above it consisting of a roller, such that when the relative side movement is carried out between the part and the cutting element a beveling occurs thanks to the rotational movement received by the tool from an electric motor. When the parts are small, the machine itself moves the part as it machines it, whereas when the parts are large it is the machine which moves along the part, it being recommendable and sometimes necessary in these circumstances to have a carriage for supporting the machine and preventing the need for an operator by operating in these circumstances by itself.

Such a carrige is disclosed in document CH 307719, wich discloses all the features of the preamble of claim 1.

### Description of the Invention

The carriage of the invention comprises a chassis provided at its lower part with orientable wheels and at its upper part an upward extension up to the height required in each case, formed by four corner masts which at their upper part support the structure in which the machine is supported. To that end, said masts have an extension in a threaded bar in which respective springs are inserted, which springs are interposed respectively between the base of each mast and said structure and above it and against an upper stop nut, said springs acting as a suspension means for the structure in which the machine is supported so that it is able to carry out a horizontal movement despite the deficiencies or obstacles in its path. The lower spring offers more resistance to the compression than the upper spring in order to compensate the weight of the machine and so that the support structure of the machine can oscillate slightly upwards and downwards in an independent manner in the four support points.

For the purpose of varying the height of the machine support structure until it reaches the desired position in each case, the base of each of the threaded bars has a support disc for the lower spring which threads into the corresponding bar and has a configuration which allows rotating it with a tool or another conventional gripping means.

According to another feature of the invention, the machine support structure has at its upper part a base in which the frame of the machine is fixed and which is articulated at one side, having at the opposite side means for adjusting the degree of inclination it can adopt, comprised between 20° and 45° approximately. These means are formed by a support rod which is rotated by means of an upper flywheel. The degree of inclination of the base in which the machine is fixed can be observed in a side graduated scale, said base having a locking screw in the chosen position.

Once the carriage is placed at the suitable height and inclination and the machine on the part to be machined, when the latter starts running it will move by itself on the part, supported by this carriage, which will roll on the floor of the workshop overcoming the obstacles that it may encounter in its path without these obstacles affecting the position of the machine as long as they exceed logical limits.

### Description of the Drawings.

In order to complement the description which is being made and with the aim of facilitating the understanding of the features of the invention, a set of drawings is attached to this specification in which the following has been represented with an illustrative and non-limiting character:

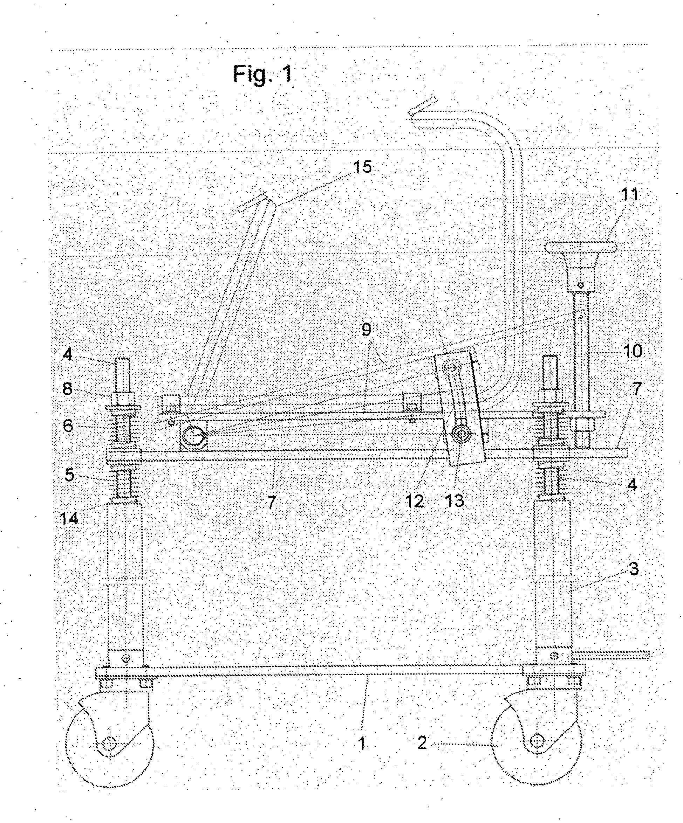

Figure 1 shows a side elevational view of the carriage of the invention.

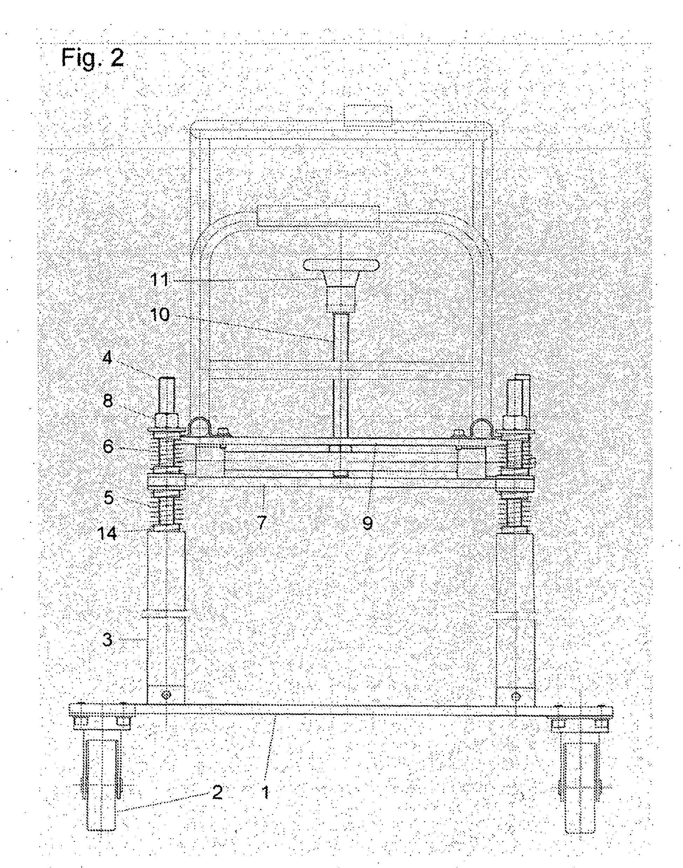

Figure 2 shows a front elevational view of the same carriage.

### Preferred Embodiment of the Invention

As can be observed in the indicated figures, the carriage of the invention has a chassis (1) provided at its lower part with four orientable wheels (2) with which it can move in any direction. This chassis (1) has an upward extension up to a suitable work height which will depend on the height of the machine and on the height at which the part to be machined is located, and is formed by four corner masts (3) having at their upper part means for supporting the structure (7) supporting the machine.

According to the invention, these means for supporting the structure (7) are formed by respective extensions (4) in the form of threaded bars in which two springs (5) and (6) are interposed, which springs are located respectively as follows: spring (5) between the base of said bar and the structure (7), and spring (6) between said structure (7) and the upper stop nut (8). The structure (7) is thus supported at four points having a certain flexibility in the vertical movement, such that if one of the wheels (2) encounters for example a small object on the floor, the corresponding mast (3) will be lifted compressing spring (5), whereas spring (6) expands, such that the structure (7) remains in this corner at the same height as the others. For the purpose of adjusting the initial height of each of the support points, a disc or nut (15) on which the lower spring (5) is really seated is threaded in all the bars (4), with this disc or nut and the stop nut (8) the resting height of the structure (7) and the suitable stress in the springs (5-6) can be varied so that this structure (7) can move slightly upwards and downwards. The lower spring (5) offers more resistance than the upper spring (6) for the purpose of compensating the weight of the machine located on the structure (7) and so that the suspension movements are possible without offering more resistance in one direction than in the opposite one.

As can be seen in the figures, the structure (7) supporting the machine, fixed through its frame (15), has a support base (9) above it which is articulated at one side, whereas at the opposite side it has an adjustable stop (10) threading into said base (9) and resting on the structure (7), the angle of inclination of the base (9) being controlled by means of a flywheel (11), the scale (12) of which can be observed in a side of the carriage; there is a screw (13) in said scale for locking it in the desired position. This part of the carriage allows placing the machine on top in a horizontal position, such that then the machining cutter attacks the part with an approximate 30° angle, or is inclined until a machining angle of around 45° is obtained; in any case the carriage remains horizontal and moves on an also horizontal surface.

Having sufficiently described the nature of the invention as well as a preferred embodiment, it is stated for all relevant purposes that the materials, shape and arrangement of the described elements can be modified provided that this does not entail the alteration of the essential features of the invention claimed below:

## Claims

1. A movement carriage for a machine, specifically for a beveler moving by itself along the part as it carries out its machining, comprising a chassis (1) provided at its lower part with orientable wheels (2) in which the machine can be supported so that it is able to carry out a horizontal movement despite the deficiencies and obstacle in the path of the carriage **characterized in that** it comprises an upper extension formed by several masts (3) supporting at their opposite end a structure (7) in which the machine can be supported, and **in that** said masts (3) have an extension in a threaded bar (4) in which respective springs (5-6) are inserted, which springs are interposed respectively between the base of each mast and said structure (7) and above it against an upper stop nut (8), said springs acting as a suspension means for the structure (7)

2. A carriage according to the previous claim, **characterized in that** the base of each of the threaded bars (4) has a support disc for the lower spring (5) threading into the corresponding bar (4), the height of the machine support structure (7) being varied with the disc until it reaches the desired position.

3. A carriage according to the previous claims, **characterized in that** the machine support structure (7) has at its upper part a base (9) in which the frame (15) of the machine is fixed, articulating at one side whereas at the at the opposite side it has means for adjusting the degree of inclination it can adopt formed by a support rod (10) rotated by a flywheel (11).

4. A carriage according to the previous claim, **characterized in that** it has a graduated scale indicating the degree of inclination of the base (9) in which the machine is fixed with respect to the horizontal structure (7), and it has a screw (13) for fixing the latter in the chosen position.

## Patentansprüche

1. Fahrwagen für eine Maschine, insbesondere für eine Abschrägmaschine, die sich von alleine entlang des Teils bewegt, während sie ihre Bearbeitung ausführt, welcher ein Fahrgestell (1) umfasst, das an seinem unteren Teil mit ausrichtbaren Rädern (2) versehen ist, an welchem sich die Maschine aufstützen kann, so dass sie trotz der Mängel und Hindernisse im Weg des Wagens eine horizontale Bewegung durchführen kann, **dadurch gekennzeichnet, dass** er eine obere Verlängerung umfasst, die durch mehrere Ständer (3) gebildet ist, welche an ihrem entgegengesetzten Ende eine Struktur (7) stützen, an welcher sich die Maschine aufstützen kann, und dass die genannten Ständer (3) eine Verlängerung in einer Gewindestange (4) haben, in welcher jeweilige Federn (5 - 6) eingesetzt sind, wobei die Federn jeweils zwischen dem Boden von jedem Ständer und der genannten Struktur (7) und oberhalb derselben an einer oberen Anschlagsmutter (8) eingefügt sind, wobei die genannten Federn als Federmittel für die Struktur (7) wirken.

2. Wagen nach dem vorherigen Anspruch, **dadurch gekennzeichnet, dass** der Boden jeder der Gewindestangen (4) eine Stützscheibe für die untere Feder (5) hat, die sich auf die entsprechende Stange (4) aufschraubt, wobei die Höhe der Maschinenstützstruktur (7) mit der Scheibe verändert werden kann, bis sie die gewünschte Position erreicht.

3. Wagen nach den vorherigen Ansprüchen, **dadurch gekennzeichnet, dass** die Maschinenstützstruktur (7) an ihrem oberen Teil einen Boden (9) hat, in welchem der Rahmen (15) der Maschine befestigt ist, wobei er an einer Seite angelenkt ist, während er an der entgegengesetzten Seite Mittel zum Einstellen des Neigungsgrads hat, den er annehmen kann, die durch eine durch ein Schwungrad (11) gedrehte Stützstange (10) gebildet sind.

4. Wagen nach dem vorherigen Anspruch, **dadurch gekennzeichnet, dass** er eine Gradskala hat, die den Neigungsgrad des Bodens (9), in welchem die Maschine bezüglich der horizontalen Struktur (7) befestigt ist, angibt, und dass er eine Schraube (13) zum Befestigen der Letzteren in der gewählten Position hat.

## Revendications

1. Chariot de déplacement pour une machine, spécifiquement pour un biseauteur qui se déplace par lui-même le long de la pièce dont il réalise l'usinage, comprenant un châssis (1) prévu sur sa partie inférieure avec des roues orientables (2) dans lequel la machine peut être supportée de manière à pouvoir réaliser un mouvement horizontal malgré les déficiences et les obstacles sur le trajet du chariot, **caractérisé en ce qu'**il comprend une extension supérieure formée par divers mâts (3) supportant à leurs extrémités opposées une structure (7) dans laquelle la machine peut être supportée et **en ce que** lesdits mâts (3) ont une extension dans une barre filetée (4) dans laquelle sont insérés des ressorts (5-6) respectifs, lesdits ressorts sont interposés respectivement entre la base de chaque mât et ladite structure (7) et au-dessus de celle-ci contre un écrou de blocage supérieur (8), lesdits ressorts agissant comme un moyen de suspension pour la structure (7).

2. Chariot selon la revendication précédente, **caractérisé en ce que** la base de chacune des barres filetées (4) a un disque de support pour le ressort inférieur (5) qui se visse dans la barre correspondante (4), la hauteur de la structure (7) de support de la machine étant variée par le disque jusqu'à atteindre la position voulue.

3. Chariot selon les revendications précédentes, **caractérisé en ce que** la structure (7) de support de la machine a sur sa partie supérieure une base (9) dans laquelle est fixé le bâti (15) de la machine, étant articulé d'un côté tandis que du côté opposé il a des moyens pour ajuster le degré d'inclinaison qu'il peut adopter, formés par une tringle de support (10) tournée par un volant (11).

4. Chariot selon la revendication précédente, **caractérisé en ce qu'**il a une échelle graduée indiquant le degré d'inclinaison de la base (9) sur laquelle est fixée la machine par rapport à la structure horizontal (7), et il a une vis (13) pour fixer cette dernière dans la position voulue.
